# EUROPÄISCHE PATENTSCHRIFT

(11) **EP 3 321 077 B1**
(45) Veröffentlichungstag und Bekanntmachung des Hinweises auf die Patenterteilung: **27.01.2021**
(21) Anmeldenummer: 17187180.9
(22) Anmeldetag: 22.08.2017
(51) Int. Cl.: B29D 30/06, B60C 11/12, B60C 11/03

(54) **VULKANISATIONSFORM UND FAHRZEUGLUFTREIFEN**
VULCANISATION MOULD AND PNEUMATIC TYRE FOR A VEHICLE
MOULE DE VULCANISATION ET PNEU DE VÉHICULE

(30) Priorität: 11.11.2016 DE 102016222182
(43) Veröffentlichungstag der Anmeldung: 16.05.2018
(73) Patentinhaber: Continental Reifen Deutschland GmbH, 30165 Hannover (DE)
(72) Erfinder: Schlittenhard, Jan, 30900 Wedemark (DE); Lange, Holger, 30171 Hannover (DE); Seng, Matthias, 30453 Hannover (DE)
(74) Vertreter: Finger, Karsten

(56) Entgegenhaltungen:
- WO-A1-2005/030501
- DE-A1- 19 506 697
- DE-A1- 19 914 215
- DE-A1-102014 216 868
- JP-A- 2004 230 821
- JP-A- 2014 061 642
- US-A- 4 230 512
- US-A- 6 143 223

## Beschreibung

Die Erfindung betrifft eine Vulkanisationsform für einen Fahrzeugluftreifen, welcher einen Laufstreifen mit Profilpositiven mit parallel zueinander bzw. im Wesentlichen parallel zueinander verlaufenden Einschnitten aufweist, mit den Laufstreifen ausformenden Formteilen, in welchen Einschnitte ausbildende Lamellenbleche verankert sind und welche mit Rillen ausformenden Profilstegen versehen sind, wobei die Lamellenbleche jeweils einen innerhalb des Formteiles befindlichen Verankerungsteil und einen den Einschnitt im Laufstreifen ausformenden Teil aufweisen, und wobei bei den Lamellenblechen von der Innenseite des Formteiles ausgehend jeweils zumindest ein Entlüftungskanal in den Formteil hinein verläuft.

Die Erfindung betrifft ferner einen Fahrzeugluftreifen, welcher einen Laufstreifen mit Profilpositiven mit parallel zueinander bzw. im Wesentlichen parallel zueinander verlaufenden Einschnitten aufweist und welcher in einer Vulkanisationsform gemäß der Erfindung vulkanisiert worden ist.

Eine Vulkanisationsform der eingangs genannten Art ist beispielsweise aus der DE 10 2014 216 868 A1 bekannt. Die Entlüftungskanäle sind Entlüftungsschlitze, welche im Wesentlichen parallel zur Erstreckungsrichtung der Lamellenbleche verlaufen.

Aus der DE 11 2011 102 421 T5 ist eine weitere Vulkanisationsform mit Lamellenblechen bekannt, die in der Querrichtung des Laufstreifens verlaufende Einschnitte ausbilden. An der Innenseite der Formteile ist um jedes Lamellenblech ein an das Lamellenblech angrenzender, das Lamellenblech umlaufender Entlüftungsschlitz ausgebildet, welcher innerhalb des Formteiles in einen Entlüftungskanal mündet.

Aus der JP 2014 061 642 A ist eine weitere Vulkanisationsform mit Formteilen mit Lamellenblechen bekannt. Die Lamellenbleche sind mit gerade und parallel zueinander verlaufenden Aussparungen mit einer Breite von 0,03 mm bis 0,05 mm durchsetzt, welche sowohl im Verankerungsteil als auch in dem den Einschnitt ausformenden Teil des Lamellenblechs verlaufen. Innerhalb des Formteiles münden die Aussparungen jeweils in einen Entlüftungskanal.

In der WO 2005 030 501 A1 wird ferner darauf hingewiesen, dass es vorteilhaft ist, Einschnitte beim Abrollen des Reifens geöffnet zu halten, um das Traktionsverhalten auf schneebedeckten Fahrbahnen zu verbessern. Durch in den Lamellenblechen ausgebildete Schlitze können bei der Vulkanisation Gummibrücken gebildet werden. Diese werden jedoch beim Entformen des Reifens zwangsweise durchgerissen, was den erwünschten Effekt zunichtemacht.

Die DE 196 06 697 A1 offenbart eine Vulkanisationsform mit Formteilen, an welchen Schneidwerkzeuge angebracht sind. Die Schneidwerkzeuge erstrecken sich jeweils zwischen Rillen ausformenden Profilrippen. Jedes Schneidwerkzeug weist eine der Innenseite des Formteiles zugewandte Schneidkante auf. Bei der Vulkanisation wird der Bereich zwischen der Schneidkante und der Innenseite des Formteiles mit Gummi gefüllt. Beim Entformungsvorgang schneidet sich das Schneidwerkzeug durch das Gummimaterial des gebildeten Profilsegments, sodass ein Einschnitt entsteht.

Beim Einformen eines Reifenrohlings in als Entlüftungsschlitze ausgebildete Entlüftungskanäle aufweisende Vulkanisationsformen hinterlassen die Entlüftungsschlitze auf den Profilpositiven niedrige Erhebungen, welche in Querrichtung, parallel zu den Einschnitten über die gesamte oder nahezu über die gesamte Erstreckungslänge der Einschnitte verlaufen. Derartige am Laufstreifen vorhandene Erhebungen sind vor allem bei neuen Reifen, die unter winterlichen Fahrbedingungen, also auf Eis und/oder Schnee, gefahren werden nachteilig, da sie die Nettokontaktfläche des Laufstreifens, über welche Reibung übertragen wird, deutlich reduzieren.

Der Erfindung liegt daher die Aufgabe zugrunde, bei einer Vulkanisationsform der eingangs genannten Art weiterhin eine sichere Formentlüftung zu ermöglichen, wobei jedoch bei der Vulkanisation die Entlüftungskanäle im Laufstreifen in geringerem Ausmaß Erhebungen im Laufstreifen ausbilden sollen, um die Griffeigenschaften auf Schnee und/oder Eis bei neuem Reifen zu verbessern.

Gemäß den Merkmalen des unabhängigen Anspruchs 1 wird die gestellte Aufgabe erfindungsgemäß dadurch gelöst, dass der Entlüftungskanal an der Verankerungsposition des Lamellenbleches ausgebildet ist, jeweils den Verankerungsteil des Lamellenbleches in radialer Richtung durchsetzt und innerhalb des Verankerungsteils des Lamellenbleches eine Breite von 0,05 mm bis 0,30 mm aufweist, wobei in dem den Einschnitt ausformenden Teil des Lamellenbleches in Fortsetzung des Entlüftungskanals eine Aussparung ausgebildet ist, welche eine Tiefe aufweist, die ausgehend von der Innenseite des Formteiles 1,0 mm bis 12,0 mm beträgt.

Durch das erfindungsgemäße Positionieren von Entlüftungskanälen im Verankerungsteil des Lamellenbleches und das Vorsehen von Aussparungen in den Lamellenblechen in Fortsetzung der Entlüftungskanäle ist es möglich, die Vulkanisationsform im besonders kritischen Bereich der Lamellenbleche zuverlässig zu entlüften, wobei auf Durchgangsbohrungen in den Lamellenblechen verzichtet werden kann. Ferner werden durch das Ausbilden der Entlüftungskanäle an den Verankerungspositionen der Lamellenbleche kaum noch Erhebungen am Laufstreifen ausgebildet, sodass die Nettokontaktfläche des Laufstreifens und damit die Winterfahreigenschaften bei neuem Reifen nicht mehr beeinträchtigt werden.

Bei dem erfindungsgemäßen, mit Einschnitten im Laufstreifen versehenen Fahrzeugluftreifen nach Anspruch 12, welcher in der erfindungsgemäßen Vulkanisationsform vulkanisiert worden ist, ist an zumindest einer Einschnittwand zumindest eines Einschnittes zumindest eine von der Einschnittwand vorspringende Gummirippe ausgebildet, welche an der zweiten gegenüberliegenden Einschnittwand anliegt, wobei sich die Gummirippe(n) ausgehend von der Einschnittkante in radialer Richtung ins Innere des Einschnittes hineinerstrecken und wobei die Gummirippe(n) im Einschnittinneren entlang der Einschnittwand, von welcher sie vorspringt bzw. vorspringen, eine Länge von 1,0 mm bis 12,0 mm aufweist bzw. aufweisen.

Bei einer alternativen Ausführungsvariante eines erfindungsgemäßen, mit Einschnitten im Laufstreifen versehenen Fahrzeugluftreifens, welcher in einer erfindungsgemäßen Vulkanisationsform vulkanisiert worden ist, ist an den beiden Einschnittwänden zumindest eines Einschnittes jeweils zumindest ein Paar von an den Einschnittwänden vorspringenden Gummirippen ausgebildet, welche einander gegenüberliegen und aneinander anliegen, wobei sich die Gummirippen ausgehend von der Einschnittkante in radialer Richtung ins Innere des Einschnittes hineinerstrecken und wobei die Gummirippen im Einschnittinneren entlang der Einschnittwand, von welcher sie vorspringen, eine Länge von 1,0 mm bis 12,0 mm aufweisen.

Derartige Gummirippen wirken beim Fahren als "Abstandhalter" zwischen den beiden Einschnittwänden eines Einschnittes und verhindern derart ein etwaiges Schließen des Einschnittes durch die beim Abrollen am Untergrund auftretenden Deformationen der Profilpositive. Dadurch bleiben die Einschnitte geöffnet, sodass die Einschnittkanten als Griffkanten an der Laufstreifenoberfläche fortlaufend zur Verfügung stehen, wodurch die Griffeigenschaften auf schnee- und eisbedeckten Fahrbahnen gegenüber Laufstreifen mit herkömmlichen Einschnitten verbessert sind.

Bei einer bevorzugten Ausführungsform der Erfindung weist die Aussparung in dem den Einschnitt ausformenden Teil des Lamellenbleches eine Breite auf, die der Breite des Entlüftungskanals innerhalb des Verankerungsteiles entspricht. Um eine ausreichende Entlüftung sicherzustellen, reicht es aus, dass die Aussparung eine sehr geringe Tiefe aufweist. Die Tiefe der Aussparung richtet sich danach, ob Gummirippen in den Einschnitten gebildet werden sollen und ob die erfindungsgemäße Vulkanisationsform zum Vulkanisieren von Nutzfahrzeugreifen oder von Reifen für Personenkraftwagen vorgesehen ist. Bevorzugter Weise beträgt die Tiefe der Aussparungen mindestens 2,0 mm.

Bei einer Vulkanisationsform, welche zum Vulkanisieren eines PKW-Reifens vorgesehen ist und bei welcher in Einschnitten auch Gummirippen ausgebildet werden sollen, ist es von Vorteil, wenn die Tiefe der Aussparungen 2,0 mm bis 6,0 mm beträgt.

Bei Aussparungen, die eine derartige Tiefe aufweisen, dass sie bei der Vulkanisation des jeweiligen Reifens mit Gummimaterial befüllt werden, erfolgt ein Durchtrennen dieses Gummimaterials während des Entformens des vulkanisierten Reifens. Um unerwünschte Einrisse zu vermeiden und einen definierten Schnitt beim Entformen des Reifens durch die Gummirippe hindurch sicherzustellen, kann bei einer Ausführungsform der Erfindung vorgesehen sein, dass die Aussparung an ihrem im Lamellenblech liegenden Ende von einem scharfkantigen, beispielsweise keilförmigen Boden begrenzt ist. Bei einer derartigen Ausführung werden an der Stelle jeder Aussparung im Einschnitt zwei einander gegenüberliegende Gummirippen gebildet.

Bei einer alternativen Ausführungsvariante der Erfindung kann der Boden der Aussparung von einer Schrägfläche gebildet sein, derart, dass das in die Aussparung eingedrungene Gummimaterial beim Entformen des vulkanisierten Reifens zumindest im Wesentlichen entlang einer der Einschnittwände durchschnitten wird.

Eine besonders gute Entlüftungswirkung wird mit Entlüftungskanälen erzielt, welche, in Draufsicht auf die Innenseite des Formteiles betrachtet, das Lamellenblech beidseitig um bis zu 0,5mm, insbesondere um 0,2 mm bis 0,5, mm überragen. Zu diesem Zweck können die Entlüftungskanäle, in Draufsicht auf die Innenseite des Formteiles betrachtet, langlochförmig ausgeführt sein.

Pro Lamellenblech können mehrere, insbesondere bis zu fünf Entlüftungskanäle vorgesehen sein.

Bei mehreren Entlüftungskanälen pro Lamellenblech ist es ferner vorteilhaft, wenn zumindest ein Entlüftungskanal bei einem Profilsteg, insbesondere in einem Abstand von 2 mm bis 4 mm zu diesem, ausgebildet ist. Diese Maßnahme stellt eine gute Entlüftung der Vulkanisationsform im heiklen Bereich des Profilsteges sicher.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 einen vereinfachten Querschnitt durch einen Teilbereich eines Formsegmentes mit einer Ausführungsvariante der Erfindung,
Fig. 2 eine Draufsicht auf einen Ausschnitt des Teilbereiches aus Fig. 1,
Fig. 3 eine Draufsicht auf einen Profilblock,
Fig. 4 einen Schnitt entlang der Linie IV-IV der Fig. 3 und
Fig. 5 anhand eines zu Fig. 4 analogen Schnittes eine Ausführungsvariante der Erfindung.

Die Erfindung befasst sich mit der Ausgestaltung von den Laufstreifen ausformenden Formteilen einer Vulkanisationsform für Fahrzeugluftreifen, insbesondere für Personenkraftwagen, Vans, Light-Trucks oder Nutzfahrzeuge, sowie mit einem in dieser Vulkanisationsform vulkanisierten Fahrzeugluftreifen.

Für Personenkraftwagen vorgesehene Vulkanisationsformen weisen üblicherweise Seitenwandschalen, welche die Seitenwände des Reifens ausformen, und sieben bis dreizehn den Laufstreifenbereich des Reifens formende Formsegmente auf. Zur Vulkanisation wird der fertig aufgebaute Reifenrohling in die Vulkanisationsform eingebracht und in diese in bekannter Weise eingeformt. Beim Einformen wird die zwischen der Vulkanisationsform und dem Reifenrohling eingeschlossene Luft durch in der Vulkanisationsform vorgesehene Entlüftungseinrichtungen abgeführt und der Reifenrohling anschließend vulkanisiert.

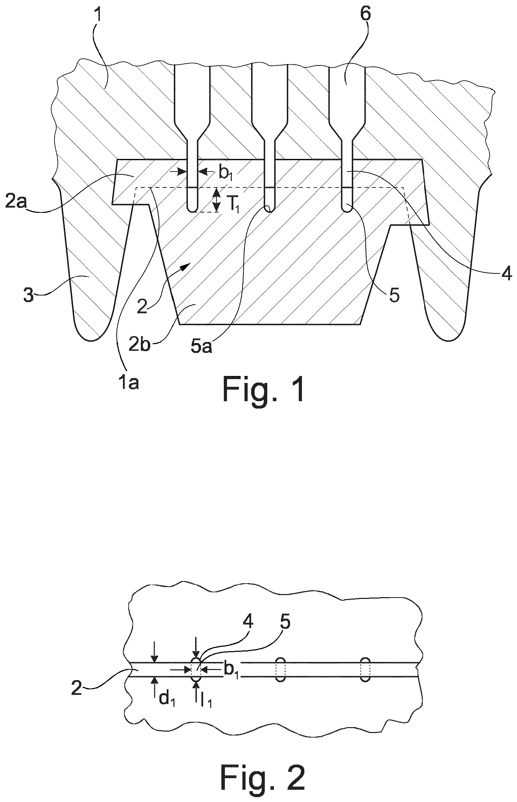

Fig. 1 zeigt einen Schnitt durch einen Teilbereich eines Formsegmentes 1 mit einem mittigen Schnitt durch ein im Formsegment 1 verankertes, ebenes Lamellenblech 2. Das Formsegment 1 weist eine in Fig. 1 mit gestrichelter Linie angedeutete Innenseite 1a auf, an welcher bei der Vulkanisation die Außenseite von Profilpositiven des Laufstreifens anliegt und geformt wird. An der Innenseite 1a sind Profilstege 3 ausgebildet, welche bei der Vulkanisation Umfangs- oder Schrägrillen im Laufstreifen formen. Das Lamellenblech 2 ist zwischen den beiden Profilstegen 3 positioniert und weist einen innerhalb des Formsegmentes 1 befindlichen Verankerungsteil 2a und einen von der Innenseite 1a vorstehenden bei der Vulkanisation einen Einschnitt im Laufstreifen ausformenden Teil 2b auf. Das Lamellenblech 2 weist eine Dicke d₁ (Fig. 2) von insbesondere 0,3 mm bis 1,0 mm auf.

An der Verankerungsposition des Lamellenbleches 2 sind im Formsegment 1 bei der dargestellten Ausführung drei schmale Entlüftungskanäle 4 ausgebildet, welche ausgehend von der Innenseite 1a gerade sowie im Wesentlichen senkrecht zur Innenseite 1a orientiert in das Formsegment 1 hineinverlaufen und dabei auch den Verankerungsteil 2a des Lamellenbleches 2 in radialer Richtung durchsetzen. In Fortsetzung jedes Entlüftungskanales 4 ist im Einschnitt ausformenden Teil 2b des Lamellenbleches 2 eine Aussparung 5 ausgebildet. Die den Profilstegen 3 benachbart angeordneten Entlüftungskanäle 4 werden, abweichend von der Darstellung in Fig. 1, vorzugsweise in der Nähe der bzw. knapp bei den Profilstegen 2, insbesondere in einem Abstand von 2 mm bis 4 mm, ausgebildet, der zwischen diesen Entlüftungskanälen 4 angeordnete Entlüftungskanal 4 bevorzugt mittig. Bei mehr als drei Entlüftungskanälen 4 werden die mittleren Entlüftungskanäle 4 vorzugsweise gleichmäßig über das Lamellenblech 2 verteilt.

Die Entlüftungskanäle 4 durchsetzen den Verankerungsteil 2a des Lamellenbleches 3 in radialer Richtung. Gemäß Fig. 2 sind die Entlüftungskanäle 4 bei der gezeigten Ausführungsvariante in Draufsicht auf die Innenseite 1a langlochförmig ausgeführt und erstrecken sich in Draufsicht im Wesentlichen senkrecht zum Lamellenblech 2. Jeder Entlüftungskanal 4 weist im Querschnitt eine Breite b₁ von 0,05 mm bis 0,30 mm, insbesondere von höchstens 0,15 mm, sowie, in Draufsicht, eine senkrecht zum Lamellenblech 3 ermittelte maximale Länge l₁ auf, welche vorzugsweise derart gewählt ist, dass die Entlüftungskanäle 4 das Lamellenblech 2 an jeder Seite um 0,2 mm bis 0,5 mm überragen. Bei der gezeigten Ausführungsvariante münden die Entlüftungskanäle 4 innerhalb des Formsegmentes 1 jeweils in einen Hauptkanal 6 ein, welcher eine größere Querschnittsfläche als die Entlüftungskanäle 4 aufweist und vorzugsweise als Bohrung ausgeführt ist.

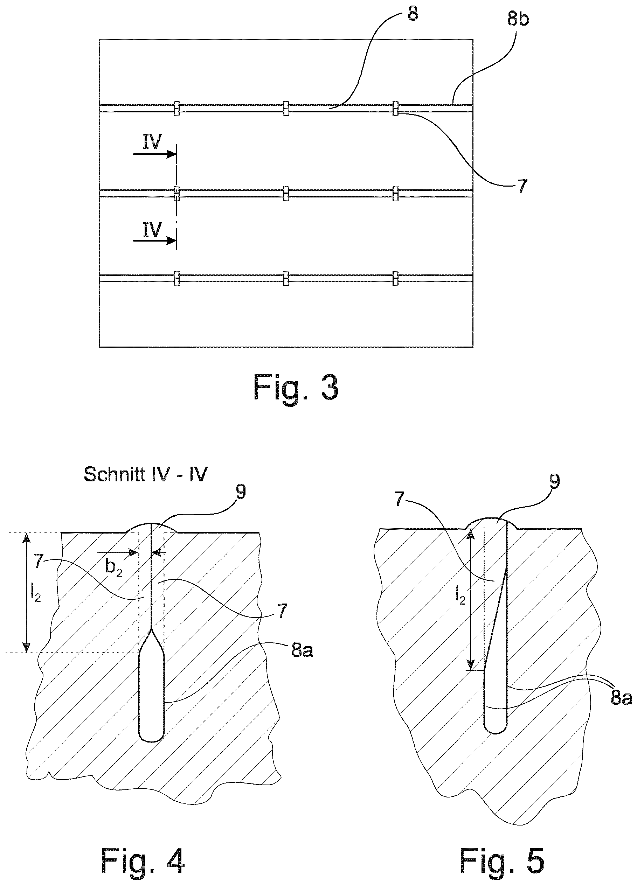

Die Aussparungen 5 durchsetzen den den Einschnitt ausformenden Teil 2b des Lamellenbleches 2 über dessen Dicke d₁ und weisen im Querschnitt - wie die Entlüftungskanäle 4 - die bereits erwähnte Breite b₁ auf. Jede Aussparung 5 weist ferner eine ausgehend von der Innenseite 1a in radialer Richtung ermittelte Tiefe T₁ von 0,1 mm bis 12,0 mm auf. An ihren in der Tiefe T₁ innerhalb des Lamellenbleches 2 liegenden Enden sind die Aussparungen 5 jeweils durch einen scharfkantigen Boden 5a begrenzt, der bei dieser Ausführungsvariante eine spitzwinkelige Keilform aufweist, so dass beim Entformen des vulkanisierten Reifens insbesondere der in Fig. 4 dargestellte Einschnittquerschnitt entsteht.

Bei für PKW-Reifen vorgesehenen Vulkanisationsformen beträgt die Tiefe T₁ vorzugsweise 2,0 mm bis zu 6,0 mm, bei für Nutzfahrzeugreifen vorgesehenen Vulkanisationsformen kann die Tiefe T₁ 2,0 mm bis zu 12,0 mm betragen.

Gemäß einer bevorzugten Ausführungsvariante ist die Tiefe T₁ der Aussparungen 5 größer als 1,0 mm. Sind derartige Aussparungen 5 vorgesehen, fließt während der Vulkanisation des Fahrzeugluftreifens die den Laufstreifen ausbildende Kautschukmischung bzw. das entsprechende sich aus dieser bildende Gummimaterial in die Aussparungen 5 hinein und füllt diese auf. Beim Entformen des Fahrzeugluftreifens aus der Vulkanisationsform durchtrennt der scharfkantige, keilförmige Boden 5a der Aussparungen 5 das in den Aussparungen 5 ausgebildete Gummimaterial in radialer Richtung, wodurch pro Aussparung 5 innerhalb des Einschnittes im Laufstreifen zwei Gummirippen 7 (Fig. 3 und Fig. 4) gebildet werden.

Fig. 3 zeigt eine Draufsicht auf einen Profilblock eines Laufstreifens mit Einschnitten 8, welche mit Lamellenblechen 2 ausgeformt wurden, deren Aussparungen 5 die bevorzugte Tiefe T₁ größer 1,0 mm aufweisen. Der gezeigte Profilblock weist drei jeweils von einem Lamellenblech 2 gebildete Einschnitte 8 mit einer, gemäß der Dicke d₁ der Lamellenbleche 2, vorzugsweise konstanten Einschnittbreite von 0,3 mm bis 1,0 mm auf, wobei die Einschnitte 8 bei der dargestellten vereinfachten Ausführung von parallel zueinander orientierten ebenen Lamellenblechen 2 ausgeformt wurden und den Profilblock durchqueren. Die Einschnitte 8 können sich in Draufsicht auch unter einem spitzen Winkel, welcher um bis zu 45° von der Querrichtung abweicht, erstrecken sowie zumindest abschnittsweise - mit entsprechend ausgeführten Lamellenblechen - zick-zack- oder wellenförmig ausgeführt sein.

Die Einschnitte 8 sind jeweils durch zwei Einschnittwände 8a (Fig. 4) sowie an der Oberfläche des Profilblockes jeweils durch zwei Einschnittkanten 8b begrenzt. An den Einschnittwänden 8a sind die beim Entformen des Fahrzeugluftreifens aus der Vulkanisationsform gebildeten Gummirippen 7 vorhanden, welche von den Einschnittwänden 8a vorspringen, einander jeweils paarweise gegenüberliegen und aneinander anliegen.

Wie Fig. 3 in Kombination mit Fig. 4 zeigt, erstrecken sich die Gummirippen 7 ausgehend von den Einschnittkanten 8b entlang der Einschnittwände 8a in radialer Richtung ins Innere des Einschnittes 8 hinein und weisen im Einschnittinneren in radialer Richtung entlang der jeweiligen Einschnittwand 8a eine Länge l₁ auf, welche zumindest im Wesentlichen mit der Tiefe T₁ der Aussparungen 5 des Lamellenbleches 2 übereinstimmt und daher 1,0 mm bis 12,0 mm beträgt. Im Querschnitt weisen die Gummirippen 7, parallel zu den Einschnittkanten 8b betrachtet, eine Breite b₂ auf, die entsprechend der Breite b₁ der Aussparung 5 0,05 mm bis 0,30 mm, insbesondere bis zu 0,15 mm, beträgt. Da die den Laufstreifen ausbildende Kautschukmischung bzw. das entsprechende sich aus dieser bildende Gummimaterial während der Vulkanisation auch geringfügig in die Entlüftungsschlitze 4 einfließen kann, können in Fortsetzung der Gummirippen 7 an der Oberfläche des Profilblockes kleine Erhebungen 9 mitgebildet werden, welche beispielsweise 0,1 mm bis 0,2 mm über die Einschnittkanten 8b hinausragen.

Weisen die Aussparungen 5 die bereits erwähnte Tiefe T₁ von bis zu 1,0 mm auf, hinterlassen die Aussparungen 5 und die Entlüftungsschlitze 4 am Laufstreifen keine nennenswerten Gummirippen in den Einschnitten aber an der Laufstreifenaußenfläche ggf. kleine Erhebungen.

Bei einer alternativen Ausführungsform der Erfindung ist zumindest eine Aussparung in dem den Einschnitt ausformenden Teil 2b des Lamellenbleches 2 derart gestaltet, dass ihr Boden eine Schrägfläche bildet, sodass beim Entformen des vulkanisierten Fahrzeugluftreifens das in der Aussparung befindliche Gummimaterial zumindest im Wesentlichen entlang einer der Einschnittwände 8a, wie es Fig. 5 anhand der Gummirippe 7 zeigt, durchtrennt wird. An der Aussparungsstelle wird daher innerhalb des Einschnittes 8 im Laufstreifen eine einzige Gummirippe 7 ausgebildet, die von der einen Einschnittwand 8a vorspringt und an der gegenüberliegenden anliegt. Die größte Breite der Gummirippe 7 entspricht daher der Breite des Einschnittes 8. Die größte Länge L₂ der Gummirippe 7 entlang jener Einschnittwand 8a, von welcher die Gummirippe 7 vorspringt, beträgt bis zu 12 mm. Auch bei dieser Ausführungsform wird in Fortsetzung der Gummirippe 7 an der Oberfläche des jeweiligen Profilpositivs eine kleine Erhebung 9 gebildet.

In jedem Lamellenblech 2 ist zumindest ein Entlüftungskanal 4 mit zugehöriger Aussparung 5 vorgesehen, die maximale Anzahl an Entlüftungskanälen 4 beträgt insbesondere fünf, jeweils mit zugehöriger Aussparung 5.

Die Erfindung ist nicht auf das beschriebene Ausführungsbeispiel beschränkt. Die Lamellenbleche können auch Einschnitte formen, welche sich in Draufsicht und bezogen auf ihre Mittellinien unter einem von der exakten Querrichtung um bis zu 45° abweichenden Winkel erstrecken. Ferner können die Lamellenbleche in einem Abstand vor den Profilstegen enden, sodass die Lamellenbleche innerhalb der Profilpositive endende oder nur mit einem ihrer Enden in eine Rille einmündende Einschnitte ausbilden. Die Formsegmente bzw. die den Laufstreifen ausformenden Formteile können Profilblöcke einer beliebigen Gestalt oder im Laufstreifen in Umfangsrichtung umlaufende Profilbänder ausbilden.

### Bezugsziffernliste

1 Formsegment
1a Innenseite
2 Lamellenblech
2a Verankerungsteil
2b Einschnitt ausformender Teil
3 Profilsteg
4 Entlüftungskanal
5 Aussparung
5a Boden
6 Hauptkanal
7 Gummirippe
8 Einschnitt
8a Einschnittwand
8b Einschnittkante
9 Erhebung
b₁, b₂ Breite
d₁ Dicke
l₁, l₂ Länge
T₁ Tiefe

## Patentansprüche

1. Vulkanisationsform für einen Fahrzeugluftreifen, welcher einen Laufstreifen mit Profilpositiven mit parallel zueinander bzw. im Wesentlichen parallel zueinander verlaufenden Einschnitten (8) aufweist, mit den Laufstreifen ausformenden Formteilen (1), in welchen Einschnitte (8) ausbildende Lamellenbleche (2) verankert sind und welche mit Rillen ausformenden Profilstegen (3) versehen sind, wobei die Lamellenbleche (2) jeweils einen innerhalb des Formteiles (1) befindlichen Verankerungsteil (2a) und einen den Einschnitt im Laufstreifen ausformenden Teil (2b) aufweisen, und wobei bei den Lamellenblechen (2) von der Innenseite (1a) des Formteiles (1) ausgehend jeweils zumindest ein Entlüftungskanal (4) in das Formteil (1) hinein verläuft,
**dadurch geknnzeichnet,**
dass der Entlüftungskanal (4) an der Verankerungsposition des Lamellenbleches (2) ausgebildet ist, jeweils den Verankerungsteil (2a) des Lamellenbleches (2) in radialer Richtung durchsetzt und innerhalb des Verankerungsteils (2a) des Lamellenbleches (2) eine Breite (b₁) von 0,05 mm bis 0,30 mm aufweist, wobei in dem den Einschnitt ausformenden Teil (2b) des Lamellenbleches (2) in Fortsetzung des Entlüftungskanals (4) eine Aussparung (5) ausgebildet ist, welche eine Tiefe (T₁) aufweist, die ausgehend von der Innenseite (1a) des Formteiles (1) 1,0 mm bis 12,0 mm beträgt.

2. Vulkanisationsform nach Anspruch 1, **dadurch gekennzeichnet, dass** die Aussparung (5) in dem den Einschnitt ausformenden Teil (2b) des Lamellenbleches (2) eine Breite aufweist, die der Breite (b₁) des Entlüftungskanals (4) im Verankerungsteil (2a) entspricht.

3. Vulkanisationsform nach Anspruch 1 oder 2, **dadurch gekennzeichnet, dass** die Tiefe (T₁) der Aussparung (5) mindestens 2,0 mm beträgt.

4. Vulkanisationsform für einen PKW-Reifen nach einem der Ansprüche 1 bis 3, **dadurch gekennzeichnet, dass** die Tiefe (T₁) der Aussparung (5) 2,0 mm bis 6,0 mm beträgt.

5. Vulkanisationsform nach einem der Ansprüche 1 bis 4, **dadurch gekennzeichnet, dass** die Aussparung (5) an ihrem im Lamellenblech (2) liegenden Ende von einem scharfkantigen, beispielsweise keilförmigen, Boden (5a) begrenzt ist.

6. Vulkanisationsform nach einem der Ansprüche 1 bis 4, **dadurch gekennzeichnet, dass** die Aussparung (5) an ihrem im Lamellenblech (2) liegenden Ende von einem als Schrägfläche ausgebildeten Boden (5a) begrenzt ist.

7. Vulkanisationsform nach einem der Ansprüche 1 bis 6, **dadurch gekennzeichnet, dass** der Entlüftungskanal (4), in Draufsicht auf die Innenseite (1a) des Formteiles (1) betrachtet, das Lamellenblech (2) beidseitig um bis zu 0,5 mm, insbesondere um 0,2 mm bis 0,5 mm, überragt.

8. Vulkanisationsform nach Anspruch 1 oder 7, **dadurch gekennzeichnet, dass** der Entlüftungskanal (4), im Querschnitt und in Draufsicht auf die Innenseite (1a) des Formteiles (1) betrachtet, langlochförmig ausgeführt ist.

9. Vulkanisationsform nach einem der Ansprüche 1 bis 8, **dadurch gekennzeichnet, dass** Lamellenbleche (2) vorgesehen sind, an deren Verankerungsposition bis zu fünf Entlüftungskanäle (4) vorhanden sind.

10. Vulkanisationsform nach einem der Ansprüche 1 bis 9, **dadurch gekennzeichnet, dass** zumindest ein Entlüftungskanal (4) bei einem Profilsteg (3), insbesondere in einem Abstand von 2 mm bis 4 mm zu diesem, ausgebildet ist.

11. Vulkanisationsform nach einem der Ansprüche 1 bis 10, **dadurch gekennzeichnet, dass** die Breite (b₁) des Entlüftungskanals (4) höchstens 0,15 mm beträgt.

12. Fahrzeugluftreifen, welcher in einer Vulkanisationsform gemäß einem der Ansprüche 1 bis 11 vulkanisiert worden ist und einen profilierten Laufstreifen mit Profilpositiven mit parallel zueinander bzw. im Wesentlichen parallel zueinander verlaufenden Einschnitten (8) aufweist, welche jeweils von zwei Einschnittwänden (8a) sowie jeweils von zwei Einschnittkanten (8b) begrenzt sind,
**dadurch gekennzeichnet**
**dass** an zumindest einer Einschnittwand (8a) zumindest eines Einschnittes (8) zumindest eine von der Einschnittwand (8a) vorspringende Gummirippe (7) ausgebildet ist, welche an der zweiten gegenüberliegenden Einschnittwand (8a) anliegt, wobei sich die Gummirippe(n) (7) ausgehend von der Einschnittkante (8b) in radialer Richtung ins Innere des Einschnittes (8) hineinerstreckt bzw. hineinerstrecken und wobei die Gummirippe(n) (7) im Einschnittinneren entlang der Einschnittwand (8a), von welcher sie vorspringt bzw. vorspringen, eine Länge (l₂) von 1,0 mm bis 12,0 mm aufweist bzw. aufweisen.

13. Fahrzeugluftreifen, welcher in einer Vulkanisationsform gemäß einem der Ansprüche 1 bis 12 vulkanisiert worden ist und einen profilierten Laufstreifen mit Profilpositiven mit parallel zueinander bzw. im Wesentlichen parallel zueinander verlaufenden Einschnitten (8) aufweist, welche jeweils von zwei Einschnittwänden (8a) sowie jeweils von zwei Einschnittkanten (8b) begrenzt sind,
**dadurch gekennzeichnet,**
**dass** an den beiden Einschnittwänden (8a) zumindest eines Einschnittes (8) jeweils zumindest ein Paar von an den Einschnittwänden (8a) vorspringenden Gummirippen (7) ausgebildet ist, welche einander gegenüberliegen und aneinander anliegen, wobei sich die Gummirippen (7) ausgehend von der Einschnittkante (8b) in radialer Richtung ins Innere des Einschnittes (8) hineinerstrecken und wobei die Gummirippen (7) im Einschnittinneren entlang der Einschnittwand (8a), von welcher sie vorspringen, eine Länge (l₂) von 1,0 mm bis 12,0 mm aufweisen.

14. Fahrzeugluftreifen nach Anspruch 12 oder 13, **dadurch gekennzeichnet, dass** die Gummirippe(n) (7), parallel zu den an der Außenfläche des Profilpositivs befindlichen Einschnittkanten (8b) betrachtet, eine Breite (b₁) von 0,05 mm bis 0,30 mm aufweist bzw. aufweisen.

## Claims

1. Vulcanizing mould for a pneumatic vehicle tyre which has a tread with profile positives with sipes (8) running parallel to one another or substantially parallel to one another, having mould parts (1) which form the tread and in which there are anchored lamellar plates (2) which form sipes (8) and which are equipped with profile webs (3) which form grooves, wherein the lamellar plates (2) each have an anchoring part (2a) situated within the mould part (1) and have a part (2b) which forms the sipe in the tread, and wherein, in the case of the lamellar plates (2), in each case at least one ventilation channel (4) runs into the mould part (1) proceeding from the inner side (1a) of the mould part (1),
**characterized**
**in that** the ventilation channel (4) is formed at the anchoring position of the lamellar plate (2), extends in each case through the anchoring part (2a) of the lamellar plate (2) in a radial direction, and has a width (b₁) of 0.05 mm to 0.30 mm within the anchoring part (2a) of the lamellar plate (2), wherein, in that part (2b) of the lamellar plate (2) which forms the sipe, in a continuation of the ventilation channel (4), there is formed a cutout (5) which has a depth (T₁) which amounts to 1.0 mm to 12.0 mm proceeding from the inner side (1a) of the mould part (1).

2. Vulcanizing mould according to Claim 1, **characterized in that** the cutout (5) **in that** part (2b) of the lamellar plate (2) which forms the sipe has a width which corresponds to the width (b₁) of the ventilation channel (4) in the anchoring part (2a).

3. Vulcanizing mould according to Claim 1 or 2, **characterized in that** the depth (T₁) of the cutout (5) amounts to at least 2.0 mm.

4. Vulcanizing mould for a passenger motor vehicle tyre according to any of Claims 1 to 3, **characterized in that** the depth (T₁) of the cutout (5) amounts to 2.0 mm to 6.0 mm.

5. Vulcanizing mould according to any of Claims 1 to 4, **characterized in that** the cutout (5) is delimited at its end situated in the lamellar plate (2) by a sharp-edged, for example wedge-shaped, base (5a).

6. Vulcanizing mould according to any of Claims 1 to 4, **characterized in that** the cutout (5) is delimited at its end situated in the lamellar plate (2) by a base (5a) formed as an oblique surface.

7. Vulcanizing mould according to any of Claims 1 to 6, **characterized in that**, as seen in a plan view of the inner side (1a) of the mould part (1), the ventilation channel (4) projects beyond the lamellar plate (2) to both sides by up to 0.5 mm, in particular by 0.2 mm to 0.5 mm.

8. Vulcanizing mould according to Claim 1 or 7, **characterized in that** as seen in cross section and in a plan view of the inner side (1a) of the mould part (1), the ventilation channel (4) is of slot-shaped design.

9. Vulcanizing mould according to any of Claims 1 to 8, **characterized in that** lamellar plates (2) are provided, at the anchoring position of which up to five ventilation channels (4) are provided.

10. Vulcanizing mould according to any of Claims 1 to 9, **characterized in that** at least one ventilation channel (4) is formed at a profile web (3), in particular with a spacing of 2 mm to 4 mm thereto.

11. Vulcanizing mould according to any of Claims 1 to 10, **characterized in that** the width (b₁) of the ventilation channel (4) amounts to at most 0.15 mm.

12. Pneumatic vehicle tyre which has been vulcanized in a vulcanizing mould according to any of Claims 1 to 11 and which has a profiled tread with profile positives with sipes (8) which run parallel to one another or substantially parallel to one another and which are delimited in each case by two sipe walls (8a) and in each case by two sipe edges (8b),
**characterized**
**in that**, on at least one sipe wall (8a) of at least one sipe (8), there is formed at least one rubber rib (7) which projects from the sipe wall (8a) and which bears against the second, opposite sipe wall (8a), wherein the rubber rib(s) (7) extend(s) from the sipe edge (8b) in a radial direction into the interior of the sipe (8), and wherein the rubber rib(s) (7), in the sipe interior, has/have a length (l₂) of 1.0 mm to 12.0 mm along the sipe wall (8a) from which said rubber rib(s) project(s).

13. Pneumatic vehicle tyre which has been vulcanized in a vulcanizing mould according to any of Claims 1 to 12 and which has a profiled tread with profile positives with sipes (8) which run parallel to one another or substantially parallel to one another and which are delimited in each case by two sipe walls (8a) and in each case by two sipe edges (8b),
**characterized**
**in that**, on both sipe walls (8a) of at least one sipe (8), there is formed in each case at least one pair of rubber ribs (7) which project from the sipe wall (8a) and which are situated opposite one another and bear against one another, wherein the rubber ribs (7) extend from the sipe edge (8b) in a radial direction into the interior of the sipe (8), and wherein the rubber ribs (7), in the sipe interior, have a length (l₂) of 1.0 mm to 12.0 mm along the sipe wall (8a) from which said rubber ribs project.

14. Pneumatic vehicle tyre according to Claim 12 or 13, **characterized in that**, as viewed parallel to the sipe edges (8b) situated at the outer surface of the profile positive, the rubber rib(s) (7) has/have a width (b₁) of 0.05 mm to 0.30 mm.

## Revendications

1. Moule de vulcanisation pour un bandage pneumatique de véhicule, lequel possède une bande de roulement ayant des éléments de profilé positifs pourvus d'entailles (8) parallèles les unes aux autres ou qui suivent un tracé sensiblement parallèlement les unes aux autres, comprenant des parties de moule (1) qui façonnent la bande de roulement, dans lesquelles sont ancrées des tôles lamellaires (2) formant les entailles (8) et lesquelles sont pourvues de barrettes profilées (3) qui façonnent des sillons, les tôles lamellaires (2) possédant respectivement une partie d'ancrage (2a) qui se trouve à l'intérieur de la partie de moule (1) et une partie (2b) qui façonne l'entaille dans la bande de roulement, et au moins un canal de purge d'air (4) au niveau des tôles lamellaires (2) s'étendant respectivement à l'intérieur de la partie de moule (1) en partant du côté intérieur (1a) de la partie de moule (1),
**caractérisé en ce que**
le canal de purge d'air (4) est formé au niveau de la position d'ancrage de la tôle lamellaire (2), entrecoupe respectivement la partie d'ancrage (2a) de la tôle lamellaire (2) dans la direction radiale et possède à l'intérieur de la partie d'ancrage (2a) de la tôle lamellaire (2) une largeur (b₁) de 0,05 mm à 0,30 mm, un évidement (5) étant formé dans la partie (2b) de la tôle lamellaire (2) qui façonne l'entaille, dans la continuité du canal de purge d'air (4), lequel possède une profondeur (T₁) qui, à partir du côté intérieur (1a) de la partie de moule (1), est de 1,0 mm à 12,0 mm.

2. Moule de vulcanisation selon la revendication 1, **caractérisé en ce que** l'évidement (5) dans la partie (2b) de la tôle lamellaire (2) qui façonne l'entaille possède une largeur qui correspond à la largeur (b₁) du canal de purge d'air (4) dans la partie d'ancrage (2a).

3. Moule de vulcanisation selon la revendication 1 ou 2, **caractérisé en ce que** la profondeur (T₁) de l'évidement (5) est au moins égale à 2,0 mm.

4. Moule de vulcanisation pour un pneu d'automobile selon l'une des revendications 1 à 3, **caractérisé en ce que** la profondeur (T₁) de l'évidement (5) est égale à 2,0 mm à 6,0 mm.

5. Moule de vulcanisation selon l'une des revendications 1 à 4, **caractérisé en ce que** l'évidement (5) est délimité au niveau de son extrémité qui se trouve dans la tôle lamellaire (2) par un fond (5a) à angles vifs, par exemple cunéiforme.

6. Moule de vulcanisation selon l'une des revendications 1 à 4, **caractérisé en ce que** l'évidement (5) est délimité au niveau de son extrémité qui se trouve dans la tôle lamellaire (2) par un fond (5a) réalisé sous la forme d'une surface biseautée.

7. Moule de vulcanisation selon l'une des revendications 1 à 6, **caractérisé en ce que** le canal de purge d'air (4), vu de dessus sur le côté intérieur (1a) de la partie de moule (1), fait saillie de la tôle lamellaire (2) sur jusqu'à 0,5 mm des deux côtés, notamment sur 0,2 mm à 0,5 mm.

8. Moule de vulcanisation selon la revendication 1 ou 7, **caractérisé en ce que** le canal de purge d'air (4), observé en coupe transversale et vu de dessus sur le côté intérieur (1a) de la partie de moule (1), est réalisé en forme de trou oblong.

9. Moule de vulcanisation selon l'une des revendications 1 à 8, **caractérisé en ce que** des tôles lamellaires (2) sont présentes, au niveau de la position d'ancrage desquelles se trouvent jusqu'à cinq canaux de purge d'air (4).

10. Moule de vulcanisation selon l'une des revendications 1 à 9, **caractérisé en ce qu'**au moins un canal de purge d'air (4) est formé au niveau d'une barrette profilée (3), notamment avec un écart de 2 mm à 4 mm par rapport à celle-ci.

11. Moule de vulcanisation selon l'une des revendications 1 à 10, **caractérisé en ce que** la largeur (b₁) du canal de purge d'air (4) est égale au maximum à 0,15 mm.

12. Bandage pneumatique de véhicule, lequel a été vulcanisé dans un moule de vulcanisation selon l'une des revendications 1 à 11 et possède une bande de roulement profilée ayant des éléments de profilé positifs pourvus d'entailles (8) parallèles les unes aux autres ou qui suivent un tracé sensiblement parallèlement les unes aux autres, lesquelles sont respectivement délimitées par deux parois d'entaille (8a) ainsi que respectivement par deux arêtes d'entaille (8b),
**caractérisé en ce que**
une nervure en caoutchouc (7) faisant saillie de la paroi d'entaille (8a) est formée au niveau d'au moins une paroi d'entaille (8a) d'au moins une entaille (8), laquelle repose contre la deuxième paroi d'entaille (8a) opposée, la ou les nervures en caoutchouc (7) s'étendant à partir de l'arête d'entaille (8b) dans la direction radiale à l'intérieur de l'entaille (8) et la ou les nervures en caoutchouc (7) possédant une longueur (l₂) de 1,0 mm à 12,0 mm à l'intérieur de l'entaille le long de la paroi d'entaille (8a) de laquelle elle(s) fait ou font saillie.

13. Bandage pneumatique de véhicule, lequel a été vulcanisé dans un moule de vulcanisation selon l'une des revendications 1 à 12 et possède une bande de roulement profilée ayant des éléments de profilé positifs pourvus d'entailles (8) parallèles les unes aux autres ou qui suivent un tracé sensiblement parallèlement les unes aux autres, lesquelles sont respectivement délimitées par deux parois d'entaille (8a) ainsi que respectivement par deux arêtes d'entaille (8b),
**caractérisé en ce que**
au moins une paire de nervures en caoutchouc (7) faisant saillie au niveau des parois d'entaille (8a) est respectivement formée au niveau des deux parois d'entaille (8a) d'au moins une entaille (8), lesquelles sont en vis-à-vis l'une de l'autre et reposent l'une contre l'autre, les nervures en caoutchouc (7) s'étendant à partir de l'arête d'entaille (8b) dans la direction radiale à l'intérieur de l'entaille (8) et les nervures en caoutchouc (7) possédant une longueur (l₂) de 1,0 mm à 12,0 mm à l'intérieur de l'entaille le long de la paroi d'entaille (8a) de laquelle elles font saillie.

14. Bandage pneumatique de véhicule selon la revendication 12 ou 13, **caractérisé en ce que** la ou les nervures en caoutchouc (7), observée(s) parallèlement aux arêtes d'entaille (8b) qui se trouvent au niveau de la surface extérieure de l'élément de profilé positif, possède ou possèdent une largeur (b₁) de 0,05 mm à 0,30 mm.
